(19)

Europäisches Patentamt

European Patent Office

Office européen des brevets

(11) **EP 4 539 201 A1**

(12) **EUROPEAN PATENT APPLICATION**
published in accordance with Art. 153(4) EPC

(43) Date of publication:
**16.04.2025 Bulletin 2025/16**

(21) Application number: **23904086.8**

(22) Date of filing: **14.12.2023**

(51) International Patent Classification (IPC):
$H01M\ 10/44^{(2006.01)}$      $H01M\ 4/38^{(2006.01)}$
$H01M\ 4/1395^{(2010.01)}$      $H01M\ 4/04^{(2006.01)}$
$H01M\ 10/052^{(2010.01)}$

(52) Cooperative Patent Classification (CPC):
**H01M 4/04; H01M 4/1395; H01M 4/38;**
**H01M 10/052; H01M 10/44;** Y02E 60/10

(86) International application number:
**PCT/KR2023/095110**

(87) International publication number:
**WO 2024/128887 (20.06.2024 Gazette 2024/25)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.12.2022  KR 20220175978**
            **13.12.2023  KR 20230180458**

(71) Applicant: **LG Energy Solution, Ltd.**
**Seoul 07335 (KR)**

(72) Inventors:
• **MIN, Jiwon**
  **Daejeon 34122 (KR)**
• **PARK, Inbok**
  **Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR CHARGING OR DISCHARGING LITHIUM SECONDARY BATTERY**

(57)    The present invention relates to a method for charging or discharging a lithium secondary battery, comprising: a step of manufacturing a lithium secondary battery having an anode including a silicon-based active material; a first cycle step of repeating, N1 times for the lithium secondary battery, a first cycle of discharging under 3.0V to 3.5V conditions after charging; and a second cycle step of performing, N2 times for the lithium secondary battery, a second cycle of fully discharging after charging, wherein N1/N2 is greater than 25 and less than 100.

[Figure 1]

EP 4 539 201 A1

## Description

[Technical Field]

The present invention relates to a method for charging and discharging a lithium secondary battery.

This application claims priority to and the benefit of Korean Patent Application No. 10-2022-0175978 filed in the Korean Intellectual Property Office on December 15, 2022, and Korean Patent Application No. 10-2023-0180458 filed in the Korean Intellectual Property Office on December 13, 2023, the entire contents of which are incorporated herein by reference.

[Background Art]

Recently, along with the rapid spread of electronic devices using batteries, such as mobile phones, laptop computers and electric vehicles, the demand for small, lightweight, and relatively high-capacity secondary batteries is rapidly increasing. In particular, a lithium secondary battery is in the limelight as a driving power source for portable devices because it is lightweight and has a high energy density. Accordingly, research and development efforts to improve the performance of a lithium secondary battery are being actively conducted.

In general, a lithium secondary battery includes a positive electrode, a negative electrode, a separator interposed between the positive electrode and the negative electrode, an electrolyte solution, an organic solvent, and the like. In addition, the positive electrode and the negative electrode may be formed on current collectors with active material layers each including a positive electrode active material and a negative electrode active material. In general, for the positive electrode, a lithium-containing metal oxide such as $LiCoO_2$ and $LiMn_2O_4$ is used as the positive electrode active material, and for the negative electrode, a carbon-based active material or a silicon-based active material that does not contain lithium is used as the negative electrode active material.

Among the negative electrode active materials, the silicon-based active material has attracted attention in that it has higher capacity than the carbon-based active material and excellent high-speed charge characteristics. However, the silicon-based active material has disadvantages in that a degree of volume expansion/contraction resulting from charging and discharging is high, leading to a decrease in life characteristics, and an irreversible capacity is high, leading to low initial efficiency.

In addition, in the case of secondary batteries including silicon-based active materials, cracks and volume changes in a surface part are large. In particular, when a method of transferring lithium to the negative electrode as one of pre-lithiation methods is used, the degradation in the surface part of the negative electrode becomes more severe. This has the problem of accelerating the degradation in the surface part more quickly when evaluating the life, causing a sudden drop. In addition, when secondary batteries including silicon-based active materials are subjected to charging and discharging with limited cycles, the degradation is accelerated due to uneven use of the negative electrode.

Therefore, there is a need for development of secondary batteries that can improve life characteristics while realizing the high capacity and energy density of the silicon-based active materials.

[Detailed Description of the Invention]

[Technical Problem]

The present invention relates to a method for charging and discharging a lithium secondary battery, and provides a method for charging and discharging a lithium secondary battery capable of improving the durability by adjusting a cycle driving method during charging and discharging in order to prevent degradation of a lithium secondary battery including a silicon-based active material.

[Technical Solution]

An exemplary embodiment of the present invention provides a method for charging and discharging a lithium secondary battery, the method including: a step of manufacturing a lithium secondary battery including a negative electrode including a silicon-based active material; a first cycle step of, for the lithium secondary battery, performing repeatedly $N_1$ times a first cycle of proceeding with discharge under a condition of 3.0V to 3.5V after charging; and a second cycle step of, for the lithium secondary battery, performing $N_2$ times a second cycle of proceeding with full discharge after charging, wherein $N_1/N_2$ is greater than 25 and less than 100.

[Advantageous Effects]

The method for charging and discharging a lithium secondary battery according to an exemplary embodiment of the present invention eliminates real-time generation of an irreversible phase by optimally adjusting the number of times that SOC0% (full discharge) is reached during the cycle, thereby controlling the degradation in a surface part of the negative electrode to improve the durability of the negative electrode.

Accordingly, a lithium secondary battery to which the method for charging and discharging a lithium secondary battery according to an exemplary embodiment of the present invention is applied has improvements in the discharge capacity, the initial efficiency, the resistance performance and/or the life characteristics.

[Brief Description of Drawings]

FIG. 1 is a graph showing cycle characteristics of secondary batteries of Example 1-1 and Comparative Examples 1-1 and 1-2 to which a method for charging and discharging a lithium secondary battery according to an exemplary embodiment of the present invention was applied.

FIG. 2 is a graph showing capacity characteristics of secondary batteries of Example 1-2 and Comparative Example 1-3 to which a method for charging and discharging a lithium secondary battery according to an exemplary embodiment of the present invention was applied.

FIG. 3 is a graph showing discharge resistance (Rdis) values over time in Example 1-2 and Comparative Example 1-3 to which a method for charging and discharging a lithium secondary battery according to an exemplary embodiment of the present invention was applied.

[Best Mode]

Hereinafter, the present specification will be described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms **"a",** "an" and "the" are intended to include the plural forms as well, unless the context clearly indicates otherwise.

In the present specification, the crystallinity of the structure included in the negative electrode active material can be confirmed through X-ray diffraction analysis, and the X-ray diffraction analysis may be performed by using an X-ray diffraction (XRD) analyzer (product name: D4-endavor, manufacturer: Bruker), or by appropriately adopting devices that are used in the art, in addition to the above device.

In the present specification, the presence or absence of elements and the contents of elements in the negative electrode active material can be confirmed through ICP analysis, and the ICP analysis may be performed using an inductively coupled plasma atomic emission spectrometer (ICPAES, Perkin-Elmer 7300).

In the present specification, the average particle diameter ($D_{50}$) may be defined as a particle diameter corresponding to 50% of the cumulative volume in the particle size distribution curve of the particles (graph curve of the particle size distribution). The average particle diameter ($D_{50}$) may be measured using, for example, a laser diffraction method. In the laser diffraction method, in general, particle diameters ranging from a submicron region to several millimeters can be measured, and results with high reproducibility and high resolvability can be obtained.

Hereinafter, preferred embodiments of the present invention will be described in detail. However, it should be understood that the embodiments of the present invention may be modified in various forms and the scope of the present invention is not limited to the embodiments described below.

**<Step of Manufacturing Lithium Secondary Battery>**

An exemplary embodiment of the present invention provides a method for charging and discharging a lithium secondary battery, the method including: a step of manufacturing a lithium secondary battery including a negative electrode including a silicon-based active material; a first cycle step of, for the lithium secondary battery, performing

repeatedly $N_1$ times a first cycle of proceeding with discharge under a condition of 3.0V to 3.5V after charging; and a second cycle step of, for the lithium secondary battery, performing $N_2$ times a second cycle of proceeding with full discharge after charging, wherein $N_1/N_2$ is greater than 25 and less than 100.

Generally, in the case of secondary batteries including silicon-based active materials, cracks and volume changes in a surface part are large. In particular, when a method of transferring lithium to the negative electrode as one of pre-lithiation methods is used, the degradation in the surface part of the negative electrode becomes more severe. This has the problem of accelerating the degradation in the surface part more quickly when evaluating the life, causing a sudden drop.

In addition, when charging and discharging a secondary battery including a silicon-based active material, if the charging and discharging is carried out with limited cycles in which partial discharge (3.0V to 3.5V) is performed after charging, irreversible LixSiy (x, y are real numbers) is generated, and thus, the capacity is not exhibited properly within a range of use of silicon at the end of discharge. As a result, the resistance of the negative electrode increases and the phenomenon (saw pattern) of temporary capacity degradation/recovery occurs repeatedly.

On the other hand, in the present invention, when charging and discharging a lithium secondary battery, a limited cycle in which partial discharge (3.0V to 3.5V) is performed after charging, for example, the first cycle of proceeding with discharge under a condition of 3.0V to 3.5V after charging is repeated a predetermined number of times, and then, a cycle in which full discharge (SOCO%) is performed after charging, for example, the second cycle of proceeding with full discharge after charging is performed a predetermined number of times. As a result, the first cycle is repeatedly performed to eliminate real-time generation of an irreversible phase in the negative electrode, thereby controlling degradation in the surface part of the negative electrode to improve the durability of the negative electrode.

Specifically, the first cycle is repeatedly performed $N_1$ times and the second cycle is performed $N_2$ times, and in this case, the number of times of each cycle is adjusted so that $N_1/N_2$ is greater than 25 and less than 100.

The second cycle, for example, a full discharge (SOC0%) cycle induces delithiation/lithiation within the range of use of silicon at the end of discharge to lower the resistance of the negative electrode, alleviating a degree of temporary capacity degradation due to elimination of the generated irreversible phase by the first cycle.

Therefore, a lithium secondary battery to which the method for charging and discharging a lithium secondary battery according to an exemplary embodiment of the present invention is applied has improvements in the discharge capacity, the initial efficiency, the resistance performance and/or the life characteristics.

The method for charging and discharging a lithium secondary battery according to an exemplary embodiment of the present invention includes a step of manufacturing a lithium secondary battery including a negative electrode including a silicon-based active material.

The negative electrode includes a silicon-based active material, and by optimally adjusting the number of times that SOC0% is reached during the cycle, the real-time generation of an irreversible phase in the negative electrode is eliminated, the degradation in surface part of the negative electrode caused by the volume expansion of the silicon-based active material due to charging and discharging is controlled to improve the durability of the negative electrode, and the high capacity and energy density of the silicon-based active material can be preferably exhibited.

In an exemplary embodiment of the present invention, the step of manufacturing a lithium secondary battery including the negative electrode including the silicon-based active material may include a step of forming a negative electrode active material layer on one surface or both surfaces of a negative electrode current collector layer.

The step of forming a negative electrode active material layer on one surface or both surfaces of a negative electrode current collector layer includes a step of coating a negative electrode slurry including a negative electrode active material layer composition on one surface or both surfaces of the negative electrode current collector layer, and the negative electrode active material layer composition may include one or more selected from the group consisting of a negative electrode active material, a negative electrode conductive material, and a negative electrode binder.

In an exemplary embodiment of the present invention, the negative electrode active material may include a silicon-based active material, and the silicon-based active material may include one or more selected from the group consisting of SiOx (x=0), SiOx (0<x<2), SiC and a Si alloy.

In an exemplary embodiment of the present invention, the silicon-based active material may include a compound represented by Chemical Formula 1 below.

[Chemical Formula 1]  $SiO_x (0 \leq x < 2)$

In Chemical Formula 1 above, when x=2, that is, in the case of $SiO_2$, lithium cannot be stored because $SiO_2$ does not react with lithium ions, so x is preferably within the above range.

Specifically, the silicon-based active material may include silicon (Si). Typically, Si is advantageous in that the capacity thereof is about 2.5 to 3 times higher than that of a silicon oxide (for example, $SiO_x$ (0<x<2)). However, the volume expansion/contraction of Si resulting from the charging and discharging is much larger than that of a silicon oxide, so it is not easy to commercialize Si. However, in the case of the present invention, by optimally adjusting the number of times that SOC0% is reached during the cycle of the secondary battery, the real-time generation of an irreversible phase in the negative electrode can be eliminated, thereby effectively solving the problem of deterioration in life characteristics. In addition, the advantages of the high capacity, energy density and efficiency characteristics of Si can be implemented more preferably.

In an exemplary embodiment of the present invention, the silicon-based active material may include one or more selected from the group consisting of SiOx (x=0) and SiOx (0<x<2). Specifically, the silicon-based active material may include 70 parts by weight or more of SiOx (x=0) based on 100 parts by weight of the silicon-based active material. More specifically, the silicon-based active material may include 80 parts by weight or more, 90 parts by weight or more, or 95 parts by weight or more of SiOx (x=0) based on 100 parts by weight of the silicon-based active material.

In another exemplary embodiment, the silicon-based active material may be composed of SiOx (x=0).

In an exemplary embodiment of the present invention, an average particle diameter ($D_{50}$) of the silicon-based active materials material may be 5 $\mu$m to 10 $\mu$m, specifically 5.5 $\mu$m to 8 $\mu$m, and more specifically 6 $\mu$m to 7 $\mu$m. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a possibility of sustaining the conductive network increases, resulting in an increase in the capacity retention rate. Note that, when the average particle diameter satisfies the above range, excessively large silicon particles are excluded, so that a surface of the negative electrode is formed smooth. Accordingly, a current density non-uniformity phenomenon during charging and discharging can be prevented.

In the exemplary embodiment of the present invention, the silicon-based active material generally has a characteristic BET specific surface area. The BET specific surface area of the silicon-based active material is preferably 0.01 m$^2$/g to 150.0 m$^2$/g, more preferably 0.1 m$^2$/g to 100.0 m$^2$/g, particularly preferably 0.2 m$^2$/g to 80.0 m$^2$/g, and most preferably 0.2 m$^2$/g to 18.0 m$^2$/g. The BET specific surface area is measured in accordance with DIN 66131 (using nitrogen).

In an exemplary embodiment of the present invention, the silicon-based active material may be present, for example, in a crystalline or amorphous form, and is preferably not porous. The silicon particles are preferably spherical or fragment-shaped particles. Alternatively, but less preferably, the silicon particles may also have a fibrous structure or be present in the form of a silicon-containing film or coating.

In an exemplary embodiment of the present invention, the negative electrode current collector layer generally may have a thickness of 1 $\mu$m to 100 $\mu$m. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present invention, a thickness of the negative electrode current collector layer may be 1 $\mu$m or greater and 100 $\mu$m or less, and a thickness of the negative electrode active material layer may be 20 $\mu$m or greater and 500 $\mu$m or less. However, the thickness may be variously modified depending on a type and a use of negative electrode used, and is not limited thereto.

In an exemplary embodiment of the present invention, the step of forming a negative electrode active material layer on one surface or both surfaces of a negative electrode current collector layer may include a step of coating a negative electrode slurry including a negative electrode active material layer composition on one surface or both surfaces of the negative electrode current collector layer, and the negative electrode active material layer composition may include one or more selected from the group consisting of a negative electrode active material, a negative electrode conductive material, and a negative electrode binder.

In an exemplary embodiment of the present invention, the negative electrode slurry may include a negative electrode active material layer composition and a slurry solvent.

In an exemplary embodiment of the present invention, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may refer to a content of the negative electrode active material layer composition included in the negative electrode slurry, and may refer to a content of the negative electrode active material layer composition based on 100 parts by weight of the negative electrode slurry.

When the solid content of the negative electrode slurry satisfies the above range, the viscosity is appropriate during formation of the negative electrode active material layer, so that particle agglomeration of the negative electrode active material layer composition is minimized to efficiently form the negative electrode active material layer.

In an exemplary embodiment of the present invention, the slurry solvent is not limited thereto as long as it can dissolve the negative electrode active material layer composition, but specifically, distilled water may be used.

A negative electrode according to an exemplary embodiment of the present invention may be formed by coating and drying the negative electrode slurry on the negative electrode current collector layer.

Through the drying step, the slurry solvent in the negative electrode slurry may be dried.

In an exemplary embodiment of the present invention, the negative electrode active material layer composition may include one or more selected from the group consisting of a negative electrode active material, a negative electrode conductive material, and a negative electrode binder.

In an exemplary embodiment of the present invention, a silicon-based active material may be used as the negative electrode active material, or both a silicon-based active material and a carbon-based active material may be used. In this case, a lithium secondary battery with further improved overall performance, such as cycle life characteristics, can be manufactured.

In another exemplary embodiment, $SiO_x$ (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less based on 100 parts by weight of the silicon-based active material.

In an exemplary embodiment of the present invention, for the silicon-based active material, pure silicon (Si) may be particularly used as the silicon-based active material. The use of pure silicon (Si) as the silicon-based active material may mean that, based on 100 parts by weight of the total silicon-based active material as described above, pure Si particles ($SiO_x$ (x=0)) not bonded to other particles or elements are included within the above range. More specifically, the silicon-based active material may be composed of Si.

In an exemplary embodiment of the present invention, the negative electrode may include a negative electrode current collector layer and a negative electrode active material layer, and the silicon-based active material may be included in an amount of 60 parts by weight or more based on 100 parts by weight of the negative electrode active material layer.

In an exemplary embodiment of the present invention, the silicon-based active material may be included in an amount of 60 parts by weight or more based on 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less based on 100 parts by weight of the negative electrode active material layer composition.

The negative electrode active material layer composition according to the present invention includes both a negative electrode conductive material and a negative electrode binder capable of controlling the volume expansion rate during charging and discharging even when the silicon-based active material having a significantly high capacity is used within the above range. Accordingly, even when the silicon-based active material is included within the above range, the negative electrode active material layer composition does not degrade performance of the negative electrode and has excellent output characteristics in charging and discharging.

In an exemplary embodiment of the present invention, the silicon-based active material may have a non-spherical shape and its sphericity (circularity) is, for example, 0.9 or less, for example, 0.7 to 0.9, for example 0.8 to 0.9, and for example 0.85 to 0.9.

In the present invention, the sphericity (circularity) is determined by Equation A below, in which A is an area and P is a boundary line.

[Equation A]

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery. Therefore, a type of negative electrode conductive material that is used together with the silicon-based active material is important.

In an exemplary embodiment of the present invention, the negative electrode conductive material may include one or more selected from the group consisting of a point-like conductive material, a planar conductive material, and a linear conductive material.

In an exemplary embodiment of the present invention, the point-like conductive material refers to a conductive material that may be used so as to improve conductivity of the negative electrode and has conductivity without causing a chemical change. Specifically, the point-like conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present invention, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less.

In an exemplary embodiment of the present invention, a particle diameter of the point-like conductive material may be 10 nm to 100 nm, preferably 20 nm to 90 nm, and more preferably 40 nm to 60 nm.

In an exemplary embodiment of the present invention, the negative electrode conductive material may include a planar conductive material.

The planar conductive material can serve to improve conductivity by increasing surface contact among silicon particles in the negative electrode, and at the same time, to suppress the disconnection of the conductive path due to the volume expansion, and is used as a concept including as a bulk-type conductive material or a plate-like conductive material.

In an exemplary embodiment of the present invention, the planar conductive material may include at least one selected from the group consisting of plate-like graphite, graphene, graphene oxide, and graphite flake, and preferably may be plate-like graphite.

In an exemplary embodiment of the present invention, an average particle diameter ($D_{50}$) of the planar conductive material may be 2 $\mu$m to 7 $\mu$m, specifically 3 $\mu$m to 6 $\mu$m, and more specifically 4 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present invention, the planar conductive material may have $D_{10}$ of 0.5 $\mu$m or greater and 1.5 $\mu$m or less, $D_{50}$ of 2.5 $\mu$m or greater and 3.5 $\mu$m or less, and $D_{90}$ of 7.0 $\mu$m or greater and 15.0 $\mu$m or less.

In an exemplary embodiment of the present invention, for the planar conductive material, a planar conductive material with a high specific surface area having a high BET specific surface area or a planar conductive material with a low specific surface area may be used.

In an exemplary embodiment of the present invention, for the planar conductive material, a planar conductive material with a high specific surface area or a planar conductive material with a low specific surface area may be used without limitation. However, in particular, the planar conductive material according to the present invention can be affected to some extent in the electrode performance by the dispersion effect, so that a planar conductive material with a low specific surface area that does not cause a problem in dispersion is used particularly preferably.

In an exemplary embodiment of the present invention, the planar conductive material may have a BET specific surface area of 5 $m^2$/g or greater.

In another exemplary embodiment, the planar conductive material may have a BET specific surface area of 5 $m^2$/g or greater and 500 $m^2$/g or less, preferably 5 $m^2$/g or greater and 300 $m^2$/g or less, and more preferably 5 $m^2$/g or greater and 250 $m^2$/g or less.

In another exemplary embodiment, the planar conductive material is a planar conductive material with a high specific surface area, and the BET specific surface area may satisfy a range of 50 $m^2$/g or greater and 500 $m^2$/g or less, preferably 80 $m^2$/g or greater and 300 $m^2$/g or less, and more preferably 100 $m^2$/g or greater and 300 $m^2$/g or less.

In another exemplary embodiment, the planar conductive material is a planar conductive material with a low specific surface area, and the BET specific surface area may satisfy a range of 5 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other negative electrode conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present invention, the negative electrode conductive material may be included in an amount of 10 parts by weight or more and 40 parts by weight or less based on 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 15 parts by weight or more and 25 parts by weight or less based on 100 parts by weight of the negative electrode active material layer composition.

The negative electrode conductive material according to the present invention has a completely different configuration from a conductive material that is applied to the positive electrode. That is, the negative electrode conductive material according to the present invention serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present invention is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present invention, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a plane shape inside the negative electrode active material layer, rather than playing a role in storing and releasing lithium.

That is, in the present invention, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present invention, the use of a carbon-based active material as an active material means that the carbon-based active material is processed into a point-like or spherical shape and used as a material for storing or releasing lithium.

That is, in an exemplary embodiment of the present invention, artificial graphite or natural graphite, which is a carbon-based active material, may have a BET specific surface area that satisfies a range of 0.1 $m^2$/g or greater and 4.5 $m^2$/g or less. In addition, plate-like graphite, which is a planar conductive material, has a planar shape, and a BET specific surface area thereof may be 5 $m^2$/g or greater.

In an exemplary embodiment of the present invention, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which hydrogen is substituted with Li, Na, Ca, or the like, and may also include various copolymers thereof.

The binder according to an exemplary embodiment of the present invention serves to hold the negative electrode active material and the negative electrode conductive material in order to prevent distortion and structural deformation of the negative electrode structure when the volume of the silicon-based active material expands and relaxes. When such roles are satisfied, all of the general negative electrode binders can be applied. Specifically, an aqueous binder may be used, and more specifically, a PAM-based binder may be used.

In an exemplary embodiment of the present invention, the negative electrode binder may be included in an amount of 30 parts by weight or less, preferably 25 parts by weight or less, and more preferably 20 parts by weight or less, and 1 part by weight or more, or 3 parts by weight or more based on 100 parts by weight of the negative electrode active material layer composition.

In an exemplary embodiment of the present invention, the negative electrode may be pre-lithiated.

In an exemplary embodiment of the present invention, the step of manufacturing a lithium secondary battery including a negative electrode including the silicon-based active material may further include a step of pre-lithiating the negative electrode including the silicon-based active material.

Specifically, the step of pre-lithiating the negative electrode including the silicon-based active material may include forming a negative electrode active material layer on one surface or both surfaces of a negative electrode current collector layer; preparing a transfer laminate in which a base material film and a lithium metal layer are sequentially stacked; transferring the lithium metal layer onto the negative electrode active material layer; and removing the base material film. This relates to a method of pre-lithiating an electrode for a lithium secondary battery using a lithium metal transfer process.

In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

When the method for charging and discharging a secondary battery according to the present invention is used, the irreversible phase of the lithium secondary battery is efficiently removed, so degradation in the negative electrode can be controlled. Therefore, when the method is applied to a secondary battery in which the negative electrode is pre-lithiated as described above, the durability of the battery can be improved more effectively.

In general, the pre-lithiation process chemically or physically pre-lithiates a lithium metal layer into an electrode, and specifically, may be carried out by a lithium metal transfer process, lithium metal powder deposition, an electrochemical process, or a lithium metal deposition process, and the pre-lithiation process according to the present invention may include a lithium metal transfer process.

The lithium metal layer transfer process has a feature capable of transferring highly reactive lithium metal on top of the electrode active material layer more stably. In this case, a process capable of easily transferring a lithium metal layer from the transfer laminate on top of the electrode active material layer is required.

In an exemplary embodiment of the present invention, the step of pre-lithiating the negative electrode includes preparing a transfer laminate in which a base material film and a lithium metal layer are sequentially stacked; transferring the lithium metal layer on top of the electrode active material layer; and removing the base material film.

In an exemplary embodiment of the present invention, the deposition method for depositing the lithium metal layer onto the base material film may be selected from evaporation deposition, chemical vapor deposition (CVD) and physical vapor deposition, but is not limited thereto, and various deposition methods that are used in the art may be used.

In this case, a lamination process may be performed by roll pressing the electrode for a lithium secondary battery on which the transfer laminate is stacked by applying a load of 5 kgf/cm$^2$ to 500 kgf/cm$^2$. Thereafter, a process of removing the base material film is included.

In an exemplary embodiment of the present invention, any base material film can be used without limitation as long as it has features capable of withstanding process conditions such as high temperature in the step of depositing the lithium metal, and preventing a reverse peeling problem that lithium metal is transferred onto the base material film during a winding process for transferring the deposited lithium metal.

Specifically, in an exemplary embodiment of the present invention, the base material film may be one or more selected from the group consisting of polyethylene terephthalate (PET), polyimide (PI), poly(methylmethacrylate) (PMMA), polypropylene, polyethylene and polycarbonate.

In an exemplary embodiment of the present invention, a thickness of the base material film may be 1 $\mu$m or greater and 300 $\mu$m or less, and may satisfy a range of 5 $\mu$m or greater and 200 $\mu$m or less and 10 $\mu$m or greater and 100 $\mu$m or less.

In an exemplary embodiment of the present invention, a thickness of the lithium metal may be 1 $\mu$m or greater and 10 $\mu$m or less, and preferably may satisfy a range of 3 $\mu$m or greater and 10 $\mu$m or less.

When the thicknesses of the base material film and the lithium metal satisfy the above ranges, the transfer of the lithium metal to the negative electrode active material layer can occur efficiently and the reverse transfer can be prevented.

In an exemplary embodiment of the present invention, a transfer force enhancing layer may be included on a surface in contact with the base material film and lithium metal layer of the transfer laminate, in order to improve the peelability of the lithium metal layer, to secure transferability to the electrode active material layer, and to serve as a protection layer after transfer of the lithium metal layer.

That is, the base material film may have a transfer force enhancing layer formed on at least one surface thereof. Specifically, a transfer force enhancing layer may be formed on one surface or both surfaces. The transfer force enhancing layer makes it possible to prevent a reverse peeling problem that the lithium metal layer is transferred onto the base material film during a winding process for transferring the deposited lithium metal layer to an electrode, and also makes it possible to easily separate the base material film after the lithium metal layer is transferred onto the electrode active material layer.

The transfer force enhancing layer may include one or more species selected from the group consisting of silicon-modified polyester in which a silicon chain is graft-linked to a polyester main chain, an acrylic resin, Si, melamine, and fluorine.

In an exemplary embodiment of the present invention, the transfer force enhancing layer may include polymethyl methacrylate (PMMA).

In an exemplary embodiment of the present invention, the transfer force enhancing layer may be formed by a coating method. For example, the coating method may be a method selected from the group consisting of dip coating, spray coating, spin coating, die coating, gravure coating, micro-gravure coating, comma coating, and roll coating, but is not limited thereto. That is, various coating methods that can be used to form a coating layer in the art can be used.

In an exemplary embodiment of the present invention, the step of transferring the lithium metal layer on top of the negative electrode active material layer may include laminating the transfer laminate onto the negative electrode active material layer.

Specifically, the step of transferring the lithium metal layer on top of the negative electrode active material layer may include laminating the transfer laminate onto the electrode active material layer so that a surface of the lithium metal layer opposite to a surface in contact with the transfer force enhancing layer comes into contact with a surface of the electrode active material layer opposite to a surface in contact with the electrode current collector layer.

In this case, the laminating may be performed under a temperature condition of 20°C to 90°C and a pressurization condition of 5 kgf/cm$^2$ to 500 kgf/cm$^2$.

In an exemplary embodiment of the present invention, the laminating may satisfy a pressurization condition of 5 kgf/cm$^2$ to 500 kgf/cm$^2$, and preferably 10 kgf/cm$^2$ to 150 kgf/cm$^2$.

However, the temperature condition may be omitted in the laminating. In particular, when the laminating satisfies the pressurization condition described above, the rate of pre-lithiation of lithium metal can be smoothly controlled, and accordingly, generation of a large amount of oxides and nitrides during the transfer process can be suppressed. In addition, as the pressurization range is satisfied, the lithium metal is smoothly transferred on top of the electrode active material layer, so that the problem of reverse transfer does not also occur.

After the laminating, pre-lithiation of the highly reactive lithium metal and the electrode active material layer may progress, or the reaction may not progress and pre-lithiation may progress during assembling of a battery.

In an exemplary embodiment of the present invention, the step of pre-lithiating the negative electrode may further include a step of pre-lithiating the negative electrode active material layer after removing the base material film, and the step of pre-lithiating the negative electrode active material layer may be such that the negative electrode is pre-lithiated within 30 minutes to 7 days after transferring the lithium metal.

In an exemplary embodiment of the present invention, the transfer force enhancing layer and the lithium metal are transferred together on top of the electrode active material layer, rather than the lithium metal layer being transferred solely. In this case, the transfer force enhancing layer can also serve as a protection layer capable of preventing a reaction of the highly reactive lithium metal in the air.

In an exemplary embodiment of the present invention, the step of pre-lithiating the negative electrode may include pre-lithiating the negative electrode active material layer.

The step of pre-lithiating the negative electrode active material layer may be such that the negative electrode active material layer is pre-lithiated within 30 minutes to 24 hours under conditions of 25°C and 1 atm.

The pre-lithiation step is a step of setting a condition for diffusing lithium metal into the negative electrode active material layer, and whether the pre-lithiation is completed can be determined depending on whether lithium on top of the negative electrode active material layer has completely disappeared.

In an exemplary embodiment of the present invention, a lithium secondary battery manufactured by the above method may be a lithium secondary battery including a positive electrode; a negative electrode; a separator provided between the positive electrode and the negative electrode; and an electrolyte solution.

In this case, when the negative electrode is a pre-lithiated negative electrode, the transfer force enhancing layer used during pre-lithiation may be removed, and accordingly, does not remain on top of the electrode, thereby preventing an unnecessary increase in resistance. That is, the transfer force enhancing layer improves the transfer force, can be used to protect the lithium metal layer before pre-lithiation, and can be removed before injection of the electrolyte solution.

In an exemplary embodiment of the present invention, the step of manufacturing a lithium secondary battery including the negative electrode including the silicon-based active material may further include forming a positive electrode active material layer on one surface or both surfaces of a positive electrode current collector layer.

In an exemplary embodiment of the present invention, the positive electrode current collector layer is not particularly limited as long as it has conductivity without causing a chemical change in a battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 $\mu$m to 500 $\mu$m, and a surface of the positive electrode current collector layer may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The thickness of the positive electrode current collector layer may be variously modified depending on a type and a use of the negative electrode used, and is not limited thereto.

In an exemplary embodiment of the present invention, the step of forming a positive electrode active material layer on one surface or both surfaces of a positive electrode current collector layer may include a step of coating a positive electrode slurry including a positive electrode active material layer composition on one surface or both surfaces of the positive electrode current collector layer, and the positive electrode active material layer composition may include one or more selected from the group consisting of a positive electrode active material, a positive electrode conductive material, and a positive electrode binder.

In an exemplary embodiment of the present invention, the above description of the negative electrode slurry may be likewise applied to the positive electrode slurry, except the positive electrode.

In an exemplary embodiment of the present invention, the positive electrode active material layer composition may include one or more selected from the group consisting of a positive electrode active material, a positive electrode conductive material, and a positive electrode binder.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.5$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

Specifically, the positive electrode active material may include one or more selected from the group consisting of Ni, Co, Mn, LTO, LFP, $RuO_2$, $Nb_2O_5$, $Mn_3O_4$, $Fe_2O_3$, and $Co_3O_4$.

Additionally, the positive electrode may include a sacrificial positive electrode material, and regarding the type thereof, one used in the art may be used without limitation.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

In addition, the above description of the negative electrode active material layer composition may be likewise applied to the contents of the positive electrode active material, the positive electrode conductive material, and the positive electrode binder included in the positive electrode active material layer composition.

In an exemplary embodiment of the present invention, the electrolyte solution may be, but is not limited to, for example, an organic liquid electrolyte, an inorganic liquid electrolyte, a solid polymer electrolyte, a gel-type polymer electrolyte, a solid inorganic electrolyte, a molten-type inorganic electrolyte and the like that may be used in the manufacture of the lithium secondary battery.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, such a combined use may be more preferable.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving life characteristics of the battery, suppressing a decrease in battery capacity, improving discharge capacity of the battery, and the like, in addition to the above-described electrolyte solution components.

### <Step of Charging and Discharging Lithium Secondary Battery>

The method for charging and discharging a lithium secondary battery according to an exemplary embodiment of the present invention may include a first cycle step of, for the lithium secondary battery, performing repeatedly $N_1$ times a first cycle of proceeding with discharge under a condition of 3.0V to 3.5V after charging; and a second cycle step of, for the lithium secondary battery, performing $N_2$ times a second cycle of proceeding with full discharge after charging, and $N_1/N_2$ may be greater than 25 and less than 100.

Specifically, a secondary battery may be driven by the electrochemical charging and electrochemical discharging. According to the method for charging and discharging a secondary battery of the present invention, the initial efficiency and life performance of the secondary battery can be improved by using a negative electrode including the silicon-based active material, and at the same time, by optimally adjusting the number of times that SOC0% (full discharge) is reached during the cycle of the secondary battery, the generation of an irreversible phase in the negative electrode can be controlled and the degradation in surface part of the negative electrode can be controlled while preventing deterioration in performance and collapse of an electrode structure due to the volume expansion of the silicon-based active material, leading to significant improvement in life performance of the secondary battery.

Therefore, a lithium secondary battery to which the method for charging and discharging a lithium secondary battery according to an exemplary embodiment of the present invention is applied has improvements in the discharge capacity, the initial efficiency, the resistance performance and/or the life characteristics.

In the present specification, "SOC" may refer to the remaining capacity (State of Charge) of an electrode (positive electrode or negative electrode) or a secondary battery. The SOC after charging may be an SOC at the time when electrochemical charge is completed in driving the secondary battery, and the SOC after discharging may be an SOC at the time when electrochemical discharge is completed in driving the secondary battery. That is, SOC100% after charging means that the remaining capacity of the secondary battery at the time when charge is completed is 100%, and in this case, means a full charge state. SOC65% after discharging may mean that the remaining capacity of the secondary battery at the time when discharge is completed is 65%. SOC0% after discharging means that the remaining capacity of the secondary battery at the time when discharge is completed is 0%, and in this case, means a full discharge state.

In an exemplary embodiment of the present invention, for the lithium secondary battery, the first cycle of proceeding with discharge under a condition of 3.0V to 3.5V after charging may be repeatedly performed $N_1$ times. Subsequently, the second cycle of proceeding with full discharge after charging may be performed $N_2$ times. In this case, $N_1$ and $N_2$ may each be an integer of 1 or greater.

In one example, when $N_1$ is 25 and $N_2$ is 1, the first cycle (limited cycle) can be repeated 25 times and then the second cycle (full discharge cycle) can be performed once. In an exemplary embodiment of the present invention, the first cycle step and the second cycle step may be repeatedly performed. In one example, when $N_1$ is 25 and $N_2$ is 1, a step of repeating the first cycle (limited cycle) 25 times, performing the second cycle (full discharge cycle) once, repeating the first cycle 25 times again, and then performing the second cycle (full discharge cycle) once can be repeatedly performed.

In one example, the charging may be performed under conditions of 1C and constant current/constant voltage (CC/CV).

In one example, the discharging may be performed under a condition of constant current at 0.5C up to a specific SOC, and may be performed with a cut-off at a discharge voltage according to the specific SOC.

In this case, the charging/discharging conditions and C-Rate are not limited to those described above, and methods used in the art can be appropriately applied.

In an exemplary embodiment of the present invention, the charging may be performed at SOC95% to SOC100%. For example, the charging may be under a full charge condition and a voltage at the end of charge may be 4.2V.

In an exemplary embodiment of the present invention, discharging in the first cycle may be performed up to SOC50% to SOC90%. Specifically, a voltage at the end of discharge may be 3.0V to 3.5V, and more specifically, 3.25V (SOC65%).

In one example, full discharge in the second cycle is performed up to SOC0%, and specifically, the voltage at the end of discharge may be 2.5V.

The first cycle and the second cycle may be performed under conditions of 25°C and a rest time of 20 minutes.

When full charge/discharge cycles are performed $N_2$ times after $N_1$ limited cycles for the lithium secondary battery, the formation of an irreversible phase can be effectively controlled. In this case, only when the voltage (for example, 2.5V) of the full discharge (SOC0%) condition is reached, the irreversible phase in the negative electrode is reduced and degradation in surface part can be easily controlled. If the full discharge condition is not reached, the irreversible phase cannot be easily controlled.

In addition, if the full charge/discharge cycle is performed excessively, the number of full charge/discharge cycles in the entire cycle increases and a lot of Si at the bottom of the negative electrode active material layer is used, which worsens the volume expansion of the negative electrode and deteriorates the durability of the negative electrode.

In an exemplary embodiment of the present invention, $N_1/N_2$ may be greater than 25 and less than 100. Specifically, $N_1/N_2$ may be greater than 30 and less than 80 or greater than 40 and less than 60. More specifically, $N_1/N_2$ may be 50.

When $N_1/N_2$ satisfies the above-described range, the generation of an irreversible phase in the negative electrode can be controlled in real time and the degradation in surface part of the negative electrode can be controlled, leading to significant improvement in the life performance of the secondary battery.

On the other hand, if $N_1/N_2$ is 25 or less, the number of full charge/discharge cycles in the entire cycle increases, worsening the volume expansion of the negative electrode to accelerate degradation in the negative electrode, and if $N_1/N_2$ is 100 or greater, the irreversible phase is not eliminated and the negative electrode is non-uniformly used.

In an exemplary embodiment of the present invention, $N_1$ may be greater than 25 and less than 100. Specifically, $N_1$ may be greater than 30 and less than 80 or greater than 40 and less than 60. More specifically, $N_1$ may be 50. If $N_1$ is below the range, the full charge/discharge cycle progresses excessively and a lot of Si at the bottom of the negative electrode active material layer is used, which worsens the volume expansion of the negative electrode and deteriorates the durability of the negative electrode. If $N_1$ is above the range, the irreversible phase is not eliminated in real time and the negative electrode is non-uniformly used.

In an exemplary embodiment of the present invention, $N_2$ may be 1 or greater and 3 or less. Specifically, $N_2$ may be 1. If $N_2$ exceeds the range, the full charge/discharge cycle progresses excessively and a lot of Si at the bottom of the negative electrode active material layer is used, which worsens the volume expansion of the negative electrode and deteriorates the durability of the negative electrode.

The electrochemical charging of the secondary battery may be performed using an electrochemical charging/-discharging device. Specifically, WOCS3000s (manufactured by Won-A Tech Co., Ltd.) may be used as an electrochemical charging/discharging device.

In addition, an exemplary embodiment of the present invention provides a battery system including the secondary battery. Specifically, the above-described method for charging and discharging a secondary battery can be implemented with the battery system.

For example, the secondary battery may be included in the battery system in the form of a secondary battery cell consisting of a single secondary battery or a secondary battery module that is an assembly of a plurality of secondary batteries.

The battery system may include a control unit together with the secondary battery.

The control unit may set an SOC, a driving voltage range, and the like of the secondary battery during electrochemical charging and electrochemical discharging of the secondary battery. Accordingly, electrochemical charging and electrochemical discharging of the secondary battery can be performed with the electrochemical charging and discharging range of the secondary battery and the SOC of the secondary battery set by the control unit, and the SOC and number of times of charging/discharging can be adjusted.

The control unit is not particularly limited as long as it can control the driving voltage range during electrochemical charging and electrochemical discharging of the secondary battery, and may be, for example, an electrochemical charging/discharging device. Specifically, the control unit may be built into a battery management system (BMS) included in a battery pack.

In addition, the present invention provides a battery pack including the above-described battery system.

In addition to the above-mentioned secondary battery and control unit, the battery pack may further include components known in the art, such as a battery management system (BMS) and a cooling system.

The battery system or battery pack is useful in the fields of portable devices such as mobile phones, laptop computers, and digital cameras, and electric vehicles such as hybrid electric vehicles (HEV). The battery system or battery pack can be favorably applied to power sources that require high output and large capacity, such as electric vehicles, hybrid electric vehicles, and power storage devices.

Mode for Invention

Hereinafter, Examples will be described in detail to specifically describe the present specification. However, the Examples according to the present specification may be modified in other forms, and the scope of the present application is not construed as being limited to the following Examples. The Examples of the present application are provided to more completely explain the present specification to one skilled in the art.

**<Examples and Comparative Examples>**

**Preparation Example 1**

1) Preparation of Negative Electrode

Silicon-based active material Si (average particle diameter ($D_{50}$): 5 $\mu$m) as a negative electrode active material, carbon black (product name: Super C65, manufacturer: Timcal) as a conductive material, and polyacrylic acid as a binder were added to distilled water as a solvent for forming a negative electrode slurry at a weight ratio of 70:20:10 to prepare a negative electrode slurry (solid concentration: 20 wt%).

The negative electrode slurry was coated on one surface of a copper current collector (thickness: 15 $\mu$m) serving as a negative electrode current collector with a loading amount of 120 mg/25 cm$^2$, which was then roll-pressed and dried in a vacuum oven at 130°C for 10 hours to form a negative electrode active material layer whereby a negative electrode was prepared (negative electrode before pre-lithiation).

2) Pre-lithiation of Negative Electrode

Lithium metal with a thickness of 6.2 $\mu$m was transferred to the negative electrode using roll press equipment.

Specifically, electrochemical charging was performed at a current density of 1.1 mA/cm$^2$ to be 10% of the charge capacity of the negative electrode before pre-lithiation.

3) Preparation of Positive Electrode

Li[Ni$_{0.8}$Co$_{0.1}$Mn$_{0.1}$]O$_2$ as a positive electrode active material, carbon black (product name: Super C65, manufacturer: Timcal) as a conductive material, and polyvinylidene fluoride (PVdF) as a binder were added to N-methyl-2-pyrrolidone (NMP) as a solvent for forming a positive electrode slurry at a weight ratio of 97:1.5:1.5 to prepare a positive electrode slurry (solid concentration: 78 wt%).

The positive electrode slurry was coated on both surfaces of an aluminum current collector (thickness: 12 $\mu$m) serving as a positive electrode current collector with a loading amount of 620 mg/25 cm$^2$, which was then roll-pressed and dried in a vacuum oven at 130°C for 10 hours to form a positive electrode active material layer whereby a positive electrode was prepared.

4) Preparation of Secondary Battery

A bi-cell type secondary battery was prepared by placing the two pre-lithiated negative electrodes on both surfaces of the positive electrode prepared above, interposing polypropylene separators between the positive electrode and the negative electrodes, and injecting an electrolyte. The electrolyte was obtained by adding vinylene carbonate to an organic solvent, in which fluoroethylene carbonate (FEC) and diethyl carbonate (DEC) were mixed at a volume ratio of 30:70, in an amount of 3 wt% based on a total weight of the electrolyte and adding LiPF$_6$ as a lithium salt to a concentration of 1M.

<u>**Preparation Example 2**</u>

A lithium secondary battery was prepared in the same manner as in Preparation Example 1, except that the negative electrode was not pre-lithiated.

**<Experimental Example 1: Evaluation of Cycle Characteristics>**

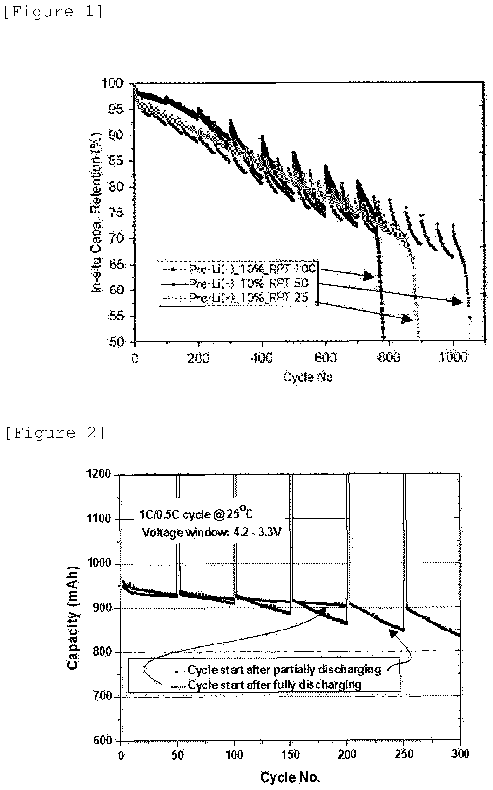

The lithium secondary batteries prepared in Preparation Examples 1 and 2 were driven while performing $N_1$ times a cycle of charging and discharging the lithium secondary batteries up to the SOC set in Table 1 below under a driving condition of 4.2V-2.5V and a cycle condition of 4.2V-3.2V, and then performing $N_2$ times a full discharge cycle.
The capacity retention rate in accordance with the cycle was evaluated using the following equation.
A graph showing the cycle characteristics of Example 1-1 using Preparation Example 1 (pre-lithiated negative electrode) and Comparative Examples 1-1 and 1-2 is shown in FIG. 1.
In addition, the capacity retention rate at the 600th cycle and the sudden drop time point are shown in Table 1.

- capacity retention rate (%)={ (discharge capacity at 600th cycle)/(discharge capacity at first cycle) }×100
  (full charge-full discharge capacity ratio around 600 cycles (4.2V-2.5V))
- sudden drop time point = number of cycles at which the real-time capacity retention rate reaches 50%

<Electrochemical charging and electrochemical discharging conditions>

- Charge: Charge at 1C in CC/CV mode up to the charge SOC of the secondary battery in Table 1 as below (cut off at 0.05C)
- Discharge: Discharge at 0.5C in CC mode up to the discharge SOC of the secondary battery in Table 1 as below (cut-off at discharge voltage in accordance with each SOC range)

[Table 1]

| Battery | \<Preparation Example\> | Charge SOC (%) | Discharge SOC (%) | $N_1$ | $N_2$ | $N_1/N_2$ | Capacity retention rate (%) | Sudden drop time point (number of cycles) |
|---|---|---|---|---|---|---|---|---|
| Example 1-1 | 1 (pre-lithiated) | 100 | 65 | 50 | 1 | 50 | 88 | 1080 |
| Comparative Example 1-1 | 1 (pre-lithiated) | 100 | 65 | 25 | 1 | 25 | 83 | 900 |
| Comparative Example 1-2 | 1 (pre-lithiated) | 100 | 65 | 100 | 1 | 100 | 78 | 780 |
| Example 2-1 | 2 (pre-lithiated X) | 100 | 65 | 50 | 1 | 50 | 85 | 790 |
| Comparative Example 2-1 | 2 (pre-lithiated X) | 100 | 65 | 25 | 1 | 25 | 75 | 680 |
| Comparative Example 2-2 | 2 (pre-lithiated X) | 100 | 65 | 100 | 1 | 100 | 86 | 770 |

When the method for charging and discharging a lithium secondary battery such as the present invention is applied, the real-time generation of an irreversible phase is eliminated by optimally adjusting the number of times that SOC0% (full discharge) is reached during the cycle, thereby controlling the degradation in a surface part of the negative electrode to improve the durability of the negative electrode.

According to Table 1 above, in the case of Examples 1-1 and 2-1 in which the charge/discharge method of repeating the first cycle 50 times and then performing the full discharge cycle once ($N_1/N_2$ satisfies 50) was applied to the lithium secondary battery including a negative electrode including a silicon-based active material, it could be confirmed that the capacity retention rate was excellent and the number of cycles until a sudden drop appeared was large. On the other hand, in the case of Comparative Examples 1-1, 1-2, 2-1, and 2-2 in which the first cycle was repeated 25 times and then the full discharge cycle was performed once ($N_1/N_2$ is 25), or the first cycle was repeated 100 times and then the full discharge cycle was performed once ($N_1/N_2$ is 100), it could be confirmed that the number of cycles until a sudden drop appeared was small, and degradation in the lithium secondary battery was accelerated compared to Examples 1-1 and 2-1.

Therefore, the lithium secondary battery to which the method for charging and discharging a lithium secondary battery according to an exemplary embodiment of the present invention is applied has significant improvement in durability of the negative electrode.

**<Experimental Example 2: Evaluation of Capacity and**

**Discharge Resistance Characteristics>**

<Example 1-2>

The lithium secondary battery prepared in Preparation Example 1 was subjected to the same charging and discharging method as in Example 1-1 in Table 1 above, except that the charging and discharging method was applied at cycle conditions of 4.2V-3.3V.

<Comparative Example 1-3>

In addition, the lithium secondary battery prepared in Preparation Example 1 was subjected to the same charging and discharging method as in Example 1-1 in Table 1 above, except that no full discharge cycle was performed at cycle conditions of 4.2V-3.3V.

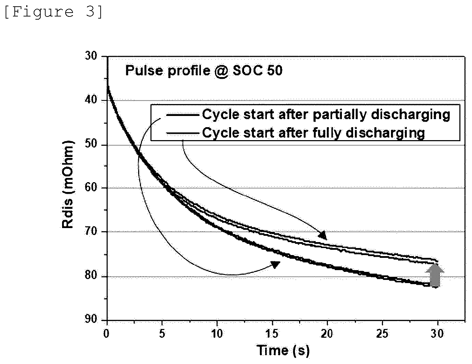

In the lithium secondary batteries of Example 1-2 and Comparative Example 1-3, a graph showing the capacity characteristics in accordance with cycle progress is shown in FIG. 2, and a graph showing the discharge resistance (Rdis) values over time is shown in FIG. 3.

FIG. 2 shows the capacity measured under the conditions of 4.2V-2.5V and 0.33C/0.33C every 50 cycles under electrochemical charging and electrochemical discharge conditions. According to this, in Example 1-2 in which the charging and discharging were performed while appropriately adjusting the number of full discharge cycles, it can be confirmed that the irreversible phase was eliminated and the phenomenon of temporary capacity degradation/recovery was alleviated as the number of cycles increases, as compared to Comparative Examples 1-3.

According to FIG. 3, in the case of Example 1-2, it can be confirmed that by performing the full discharge cycle, delithiation/lithiation was induced within the range of use of silicon at the end of discharge to reduce the discharge resistance value of the negative electrode, as compared to Comparative Example 1-3. In the discharge resistance evaluation of FIG. 3, the same cell was evaluated twice.

**Claims**

1. A method for charging and discharging a lithium secondary battery, the method comprising:

   a step of manufacturing a lithium secondary battery comprising a negative electrode comprising a silicon-based active material;
   a first cycle step of, for the lithium secondary battery, performing repeatedly $N_1$ times a first cycle of proceeding with discharge under a condition of 3.0V to 3.5V after charging; and
   a second cycle step of, for the lithium secondary battery, performing $N_2$ times a second cycle of proceeding with full discharge after charging,
   wherein $N_1/N_2$ is greater than 25 and less than 100.

2. The method of claim 1, wherein $N_2$ is 1 or greater and 3 or less.

3. The method of claim 1, wherein $N_1$ is greater than 25 and less than 100, and
   wherein $N_2$ is 1.

4. The method of claim 1, wherein the first cycle step and the second cycle step are repeatedly performed.

5. The method of claim 1, wherein the silicon-based active material comprises one or more selected from the group consisting of SiOx (x=0), SiOx (0<x<2), SiC and a Si alloy.

6. The method of claim 5, wherein SiOx (x=0) is included in an amount of 70 parts by weight or more based on 100 parts by weight of the silicon-based active material.

7. The method of claim 1, wherein the negative electrode comprises a negative electrode current collector layer and a negative electrode active material layer, and
   wherein the silicon-based active material is included in an amount of 60 parts by weight or more based on 100 parts by weight of the negative electrode active material layer.

8. The method of claim 1, wherein the negative electrode is pre-lithiated.

9. The method of claim 1, wherein the step of manufacturing a lithium secondary battery comprising a negative electrode comprising a silicon-based active material further comprises pre-lithiating the negative electrode comprising the silicon-based active material.

10. The method of claim 9, wherein the pre-lithiating the negative electrode comprising the silicon-based active material comprises:

    forming a negative electrode active material layer on one surface or both surfaces of a negative electrode current collector layer;
    preparing a transfer laminate in which a base material film and a lithium metal layer are sequentially stacked;
    transferring the lithium metal layer on top of the negative electrode active material layer; and
    removing the base material film.

11. The method of claim 10, wherein the base material film comprises a transfer force enhancing layer formed on at least one surface thereof.

12. The method of claim 10, comprising laminating the transfer laminate onto the negative electrode active material layer.

[Figure 1]

[Figure 2]

[Figure 3]

## INTERNATIONAL SEARCH REPORT

| International application No. |
| --- |
| **PCT/KR2023/095110** |

### A. CLASSIFICATION OF SUBJECT MATTER

**H01M 10/44**(2006.01)i; **H01M 4/38**(2006.01)i; **H01M 4/1395**(2010.01)i; **H01M 4/04**(2006.01)i; **H01M 10/052**(2010.01)i

According to International Patent Classification (IPC) or to both national classification and IPC

### B. FIELDS SEARCHED

Minimum documentation searched (classification system followed by classification symbols)

H01M 10/44(2006.01); H01M 10/052(2010.01); H01M 10/058(2010.01); H01M 10/42(2006.01); H01M 10/48(2006.01); H01M 4/13(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘(silicon), 음극(cathode), 충전(charge), 방전(discharge), 사이클(cycle), 리튬 이차전지(lithium secondary battery)

### C. DOCUMENTS CONSIDERED TO BE RELEVANT

| Category* | Citation of document, with indication, where appropriate, of the relevant passages | Relevant to claim No. |
| --- | --- | --- |
| Y | JP 5117638 B2 (PANASONIC CORP.) 16 January 2013 (2013-01-16)<br>See paragraphs [0111]-[0148] and claim 1. | 1-12 |
| Y | KR 10-2019-0140071 A (ROBERT BOSCH GMBH) 18 December 2019 (2019-12-18)<br>See paragraph [0088] and claims 1-3. | 1-12 |
| Y | KR 10-2022-0103469 A (LG ENERGY SOLUTION, LTD.) 22 July 2022 (2022-07-22)<br>See paragraphs [0010]-[0038] and claims 9-10. | 7-12 |
| Y | KR 10-2020-0044231 A (LG CHEM, LTD.) 29 April 2020 (2020-04-29)<br>See paragraphs [0079]-[0155] and claim 10. | 10-12 |
| A | JP 2021-114388 A (TOYOTA MOTOR CORP.) 05 August 2021 (2021-08-05)<br>See paragraphs [0068]-[0082] and claim 7. | 1-12 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 April 2024** | **02 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/095110**

| Patent document cited in search report | | | Publication date (day/month/year) | Patent family member(s) | | | Publication date (day/month/year) |
|---|---|---|---|---|---|---|---|
| JP | 5117638 | B2 | 16 January 2013 | CN | 103283083 | A | 04 September 2013 |
| | | | | EP | 2688135 | A1 | 22 January 2014 |
| | | | | JP | 2014-124244 | A1 | 17 July 2014 |
| | | | | JP | WO2012-124244 | A1 | 17 July 2014 |
| | | | | US | 2013-0314051 | A1 | 28 November 2013 |
| | | | | WO | 2012-124244 | A1 | 20 September 2012 |
| KR | 10-2019-0140071 | A | 18 December 2019 | CN | 110710043 | A | 17 January 2020 |
| | | | | EP | 3619767 | A1 | 11 March 2020 |
| | | | | EP | 3619767 | A4 | 17 June 2020 |
| | | | | JP | 2020-518991 | A | 25 June 2020 |
| | | | | JP | 6985416 | B2 | 22 December 2021 |
| | | | | US | 11769900 | B2 | 26 September 2023 |
| | | | | US | 2020-0067129 | A1 | 27 February 2020 |
| | | | | WO | 2018-201427 | A1 | 08 November 2018 |
| KR | 10-2022-0103469 | A | 22 July 2022 | CN | 116075950 | A | 05 May 2023 |
| | | | | EP | 4184652 | A1 | 24 May 2023 |
| | | | | JP | 2023-542364 | A | 06 October 2023 |
| | | | | US | 2023-0318056 | A1 | 05 October 2023 |
| | | | | WO | 2022-154309 | A1 | 21 July 2022 |
| KR | 10-2020-0044231 | A | 29 April 2020 | WO | 2020-080887 | A1 | 23 April 2020 |
| JP | 2021-114388 | A | 05 August 2021 | CN | 113140810 | A | 20 July 2021 |
| | | | | JP | 7200954 | B2 | 10 January 2023 |
| | | | | KR | 10-2021-0093162 | A | 27 July 2021 |
| | | | | US | 11757141 | B2 | 12 September 2023 |
| | | | | US | 11811030 | B2 | 07 November 2023 |
| | | | | US | 2021-0226270 | A1 | 22 July 2021 |
| | | | | US | 2022-0407128 | A1 | 22 December 2022 |
| | | | | US | 2023-0378560 | A1 | 23 November 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220175978

- KR 1020230180458